# EUROPEAN PATENT APPLICATION

(11) **EP 0 628 905 A1**
(43) Date of publication of application: **14.12.1994**
(21) Application number: 94201587.6
(22) Date of filing: 03.06.1994
(51) Int. Cl.: G06F 3/033

(54) **CD-I pointer device with 8 directions, 1 pixel/update**

(30) Priority: 11.06.1993 EP 93109365
(71) Applicant: PHILIPS ELECTRONICS N.V., 5621 BA Eindhoven (NL)
(72) Inventor: Gerlings, Jan Derk, c/o Int.Octrooibureau B.V., NL-5656 AA Eindhoven (NL)
(74) Representative: Strijland, Wilfred

(57) **Abstract**

A CD-I system comprises a display; a cursor control means coupled to the display for updating a position of a cursor; and a user-interface means being coupled to the cursor control means for user-manipulation of the cursor via the cursor control means, and being operative to specify respective displacements of the cursor in a respective selected one of a given number, preferably 8, of different directions. The user-interface means is operative to specify each respective one of the displacements having a fixed length, preferably one pixel per update in a particular operating mode of the user-interface means. Advantages are that processing time is reduced, the user-interface means is simple, and that conventional joystick software can be used in CD-I applications.

## Description

### FIELD OF THE INVENTION

The invention relates to a CD-I system comprising a display; a cursor control means coupled to the display for updating a position of a cursor; and a user-interface means being coupled to the cursor control means for user-manipulation of the cursor via the cursor control means, and being operative to specify respective displacements of the cursor in a respective selected one of a given number of different directions.

### BACKGROUND ART

With the advent of CD-I there has been created a considerably user-friendly medium, which enables interactive handling of information in an ergonomic manner. CD-I systems are particularly, but not exclusively, designed for consumer applications in domestic environments. CD-I applications, e.g., software on compact disc information carriers, are available in a large variety of titles, ranging from video games and reference books to teaching and training applications. User-interface aspects are considered among the key issues that govern the wide acceptance of CD-I. For further information on technical issues in general, see "Compact Disc-Interactive; A Designer's Overview", Kluwer, Nov. 1988, ISBN 9020121219.

In many CD-I applications (programs), user-interaction with the data processing system is achieved through cursor control. A cursor is a figure, which is displayed on the display screen and whose position can be changed relative to the screen by the user manipulating the user-interface means, e.g., a manoeuvring device such as a joystick. The user moves the cursor around the screen as in a video game, or positions the cursor in a particular area shown on the screen, e.g., to select a particular program option as in a menu. The user-interface means may be provided with a manoeuvring functionality such as, for example, a plurality of buttons, each for control of the cursor movement in a particular direction, a joy-stick, or a single thumb-controlled button for selective multiple-direction control of the cursor, or with a mouse. The user-interface means employed nowadays in CD-I is a pointer device, the so-called thumb-stick, permitting the cursor to be controlled in any of 32 directions at a large variety of speeds.

The CD-I standard defines all I/O functions and I/O devices in the CD-I system, and defines the communication protocols. The devices commonly available within CD-I, a video device with a display screen, a keyboard device and a pointer device for cursor control, each are supervised by one overall driver, called the User Communications Manager (UCM). The rationale behind the use of a UCM is that the aforesaid devices can be treated uniformly, saving a considerable amount of overhead software. The UCM governs the mutual relationships between devices. Direct access of the video driver, keyboard driver or pointer driver is not possible. A CD-I application (program) only communicates with aforesaid devices through the UCM via an operating system, also referred to as CD-RTOS.

The pointer device in CD-I is defined to communicate through the RS232-C interface. The pointer device typically transmits at a signalling rate of 1200 bauds. The information regarding a cursor position update in terms of X and Y displacements is distributed over 3 successive bytes.

By definition, the CD-I application has available only absolute cursor coordinates provided by the UCM. Absolute cursor coordinates give the position of the cursor with regard to the display screen. Commonly, a routine is available in CD-I systems to transform the absolute screen coordinates into displacements for use in the CD-I application by monitoring two successive absolute cursor positions, determining the difference and assigning a direction and magnitude to the difference by way of discretization. This routine, however, is rather time-consuming for at least two reasons.

First, the usual manoeuvring devices in CD-I make available at least 16 different directions equally spaced around a full 360-degree area at variable cursor speeds. See, for example, CD-I Technical Info Pointing Devices, Philips Interactive Media Systems Brochure, August 1990. Accordingly, determining magnitude and direction of the displacement should allow for a wide range of values, thereby requiring some processing effort.

Second, the displacement is determined from the absolute coordinates by using a reference raster centered around the previous cursor position to determine the current cursor position in the reference raster relative to its center. The reference raster therefore rides along with the cursor lagging one update. The area of the reference raster occupies a substantial portion of the screen area to allow for large displacements, i.e., high speeds. However, the reference raster itself is to be re-positioned fairly frequently. Re-positioning occurs each time when at least a part of the raster's perimeter is on or beyond the screen's edge. This repositioning operation is costly in terms of processing time.

### OBJECT OF THE INVENTION

It is therefore an object of the invention to provide a CD-I system and a manoeuvring device for a CD-I system that admit of substantial savings of processing effort required for cursor control.

### SUMMARY OF THE INVENTION

The invention achieves this object by providing a CD-I system comprising a display; a cursor control means coupled to the display for updating a position of a cursor; and a user-interface means being coupled to the cursor control means for user-manipulation of the cursor via the cursor control means, and being operative to specify respective displacements of the cursor in a respective selected one of a given number of different directions, for example spaced around a full 360-degree area, preferably equally spaced. According to the invention, the user-interface means is operative to specify each respective one of the displacements having a fixed length in a particular operating mode of the user-interface means.

The invention basically provides a directional control feature in CD-I. The processing required to execute the conversion from absolute to relative coordinates now only needs the signs of the differences between two successive absolute cursor positions to generate the displacement, since the magnitude is fixed. This considerably reduces processing time as laborious calculations in the reference raster of the aforesaid routine are avoided. Furthermore, the user-interface means needs only to transmit data indicative of the direction of the displacement. As a consequence, the user-interface means is fairly simplified.

Preferably, the number of different directions equals eight, preferably but not necessarily equally spaced around a full 360-degree area to emulate a conventional joystick known from other systems than CD-I. Note that conventional joystick software then can be employed within CD-I applications. Also note that the availability of only eight directions clearly does not violate the prescribed sixteen directions in the CD-I standard. See CD-I Technical Info Pointing Devices, Philips Interactive Media Systems Brochure, August 1990.

Inevitable inaccuracies in the operation of some types of user-interfaces in conventional CD-I systems render positioning and guidance of the cursor highly sensitive, typically resulting in a rather wobbly course which is likely to fail to please the eye. More importantly, such deviations from the intended course force the user to constantly readjust the cursor's direction. Such is the case for, e.g.,the thumb-stick mentioned above, not suitable for low-speed manipulations, and for manoeuvring devices whose operation is based on force-sensing resistors. A force-sensing resistor is, for example, a polymer thick film resistor such as FSR of Interlink. A force-sensing resistor has a resistance that decreases with increasing pressure applied to the film. Typically, the resistance value is inversely proportional to the applied force in the range between 15 gram to 10 kg and swings about 100 kΩ. It turns out that such a resistor is less suitable for high precision measurements. Repetitive measurements of the resistance when applying a force of fixed magnitude indicate that the force-versus-resistance characteristic for the same resistor shows a spread in the order of 5%, whereas the resistances of two such resistors may deviate from one another by as much as 25%. The main advantage is that FSR devices are cheap and can be applied in any shape.

The restriction to eight different directions in an embodiment of the invention, the length of the displacement being fixed, reduces the occurrence of wobbles, resulting in a smooth cursor path.

Preferably, the fixed length of the displacement is one pixel per update. This leads to even simpler processing. Since the reference raster is now only a square of 3x3 pixels, it will on the average be considerably less prone to reach the screen's edges. This further dramatically reduces the frequency of re-positioning the reference raster. As mentioned above, this re-positioning operation is rather time-consuming.

Preferably, the cursor control means is programmable to select another operating mode allowing for a variable instead of a fixed length.

### BRIEF DESCRIPTION OF THE DRAWING

The invention is explained below by way of example and with reference to the accompanying drawing, wherein:
Fig. 1 gives a diagram of the parts in a CD-I system.
Fig. 2 gives a block diagram of functionalities in a CD-I system;
Fig. 3 gives a diagram to explain aforesaid routine;
Fig. 4 gives a compass-card;
Fig. 5 and 6 give details of an embodiment of a user-interface means.

Throughout the figures, same reference numerals indicate similar or corresponding parts.

### DETAILED EMBODIMENTS

### CD-I System

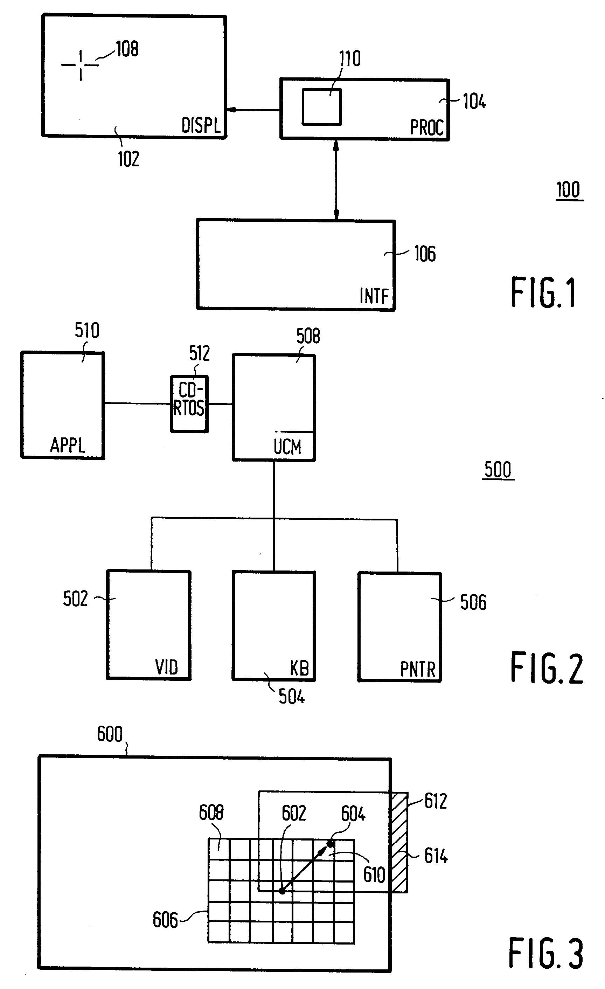

Fig. 1 gives a diagram of a CD-I system 100 in the invention. System 100 is functionally comprised of a display 102, a CD-I player 104 being operative to generate video or graphics data and being coupled to display 102, and a user-interface means 106 coupled to apparatus 104. User-interface means 106 controls the movement of a cursor 108 on display 102 through a cursor control means 110. Cursor control means 110 here is included in CD-I player 104. The term "cursor" is meant to comprise any figure shown on the display and to be selectively positioned in a particular area of the display under user-control. Cursor control means 110 usually is dedicated software. Manual operation of user-interface means 106 generates signals for transmission to cursor control means 110 that thereupon causes cursor 108 to move accordingly.

Fig. 2 shows a functional diagram of a CD-I system 500. The CD-I standard defines all I/O functions and I/O devices in the CD-I system. The devices available within CD-I, a video device 502 with a display screen, a keyboard device 504 and a pointer device 506 for cursor control, all are supervised by one overall driver 508, called the User Communications Manager (UCM). The rationale behind the use of a UCM is that the aforesaid devices 502-506 can be treated uniformly, saving a considerable amount of overhead software. UCM 508 governs the mutual relationships between devices 502-506. Direct access of video driver 502, keyboard driver 504 or pointer driver 506 is not possible.

The use of a manoeuvring device, i.e., a user-interface apparatus 506 that supplies cursor displacements instead of absolute coordinates, involves complicated operations in CD-I. A CD-I application 510 (program) only communicates with devices 502-506 through UCM 508 via an operating system 512, called CD-RTOS, and has, by definition, only absolute cursor coordinates at its disposal provided by UCM 508. This implies that the relative directions and speeds supplied by user-interface 506 first have to be converted into absolute coordinates for communication through UCM 508 and thereupon have to be reconverted into relative displacements again for application 510.

### Routine

The routine to determine the relative coordinates is explained with reference to Fig. 3. Fig. 3 shows a domain 600 for the absolute cursor coordinates. Domain 600 corresponds to the screen of display 102. The previous cursor position is at location 602. The current cursor position is at location 604. To determine the relative coordinates of the cursor (the displacement), a raster 606 is centered around location 602. Raster 606 is composed of a plurality of squares, such as square 608. Each square has a width of a pre-specified number of pixels. Location 604 falls within square 610. The displacement of the cursor now is considered to be a vector that connects the centre of the square containing location 602 to the centre of square 610 containing location 604.

For a next cursor displacement to be determined, a raster 612 is centered around location 604. Raster 612 is indicated by its perimeter 612 alone, in order not to obscure the figure. Now, however, a part 614 of raster 612 falls outside the domain of the absolute coordinates. Therefore, offsets are to be introduced into the calculations, having the effect that raster 614 and location 604 are repositioned in the centre of screen 600. This repositioning is a time-consuming operation.

Raster 606 occupies a substantial part of the area of screen 600 to permit large displacements per update, i.e., high speeds. The figure represents the right proportions in order of magnitude.

### Fixed length displacement

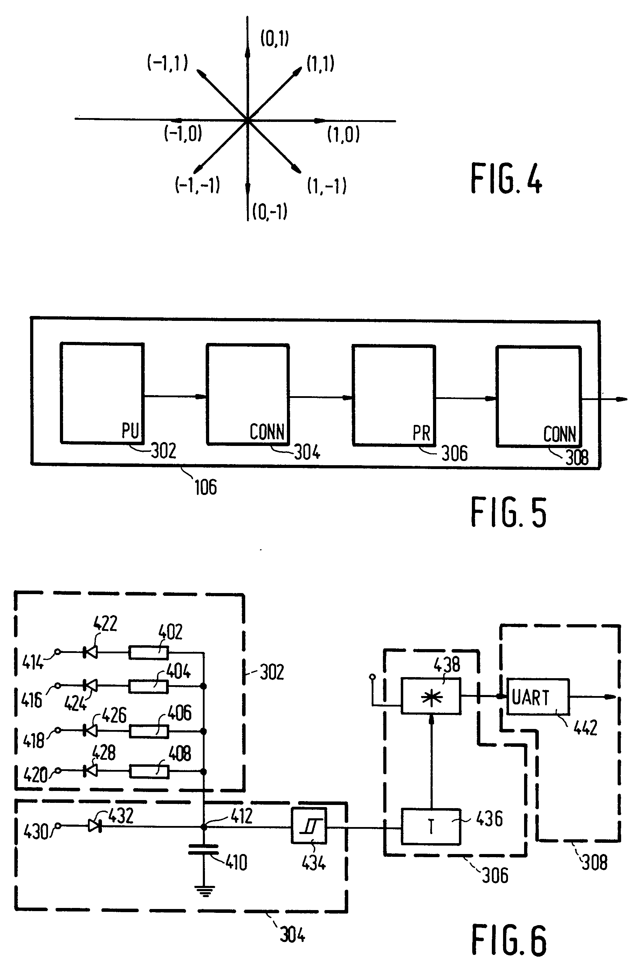

In the invention, the length of the displacement per position update is a constant. For example, the displacement length is fixed in the CD-I application. Therefore, the direction is the only relevant portion of the displacement data transmitted by user-interface 106. Fig. 4 gives an example of eight directions as available for conventional joysticks, indicated in vector notation. The direction "north-east", for instance, corresponds with the vector (1,1). If the fixed length is short, say in the order of one to ten pixels per update, re-positioning operations need not be executed as frequently as in conventional CD-I applications. Effectively, the reference raster for the one-pixel-per-update then is only three-by-three pixels and shifts only one pixel per update. The small size and low speed reduce screen edge contacts considerably.

### User-interface functionalities

Fig. 5 gives a diagram to explain the successive operations for cursor control to be carried out in the signal path from user-interface 106 to cursor control means 110. Fig. 5 shows user-interface 106 composed of a pick-up means 302; a converter 304 coupled to an output of pick-up means 302; a processor 306 coupled to an output of converter 304; and a converter 308 coupled to an output of processor 306. Pick-up means 302 is operative to sense the manipulation by the user and to provide corresponding output signals. Converter 304 is operative to convert the output signals from pick-up means 302 into appropriately formatted input signals to processor 306. Processor 306 is operative to interpret the output signals from pick-up means 302 as indicative of the desired direction of displacement of cursor 108. Converter 308 is to convert the output signals of processor 306 into an appropriate format accepted by CD-I player 104. Converter 308 can also be functionally integrated with processor 306.

### User-interface embodiment

Fig. 6 shows an example of an embodiment of user-interface means 106. Pick-up means 302 is comprised of force sensing resistors 402, 404, 406 and 408 for control of the movement of cursor 108 to the left, to the right, up and down, respectively. A force sensing resistor is, for example, a polymer thick film resistor such as FSR of Interlink. Such a resistor has a resistance that decreases with increasing pressure applied to the film. Typically, the resistance value is inversely proportional to the applied force in the range between 15 gram to 10 kg and swings about 100 kΩ.

The actual resistance values of resistors 402-408 are to be converted in digital data. This can be achieved in a variety of manners, e.g., by way of an A/D conversion, by way of an oscillator or a VCO of which the resistor is a functional part and digitally measuring the frequency or the VCO's control signal, or via an RC-arrangement to measure the varying charging or discharging time of the capacitor C through a counting circuit. The RC option turns out to be a cheap and simple solution and is implemented as follows.

Resistors 402, 404, 406 and 408 all are connected to a capacitor 410 via a node 412. Resistors 402, 404, 406 and 408 are individually coupled to control inputs 414, 416, 418 and 420, respectively, via diodes 422, 424, 426 and 428, respectively. Node 412 is further coupled to a charge control input 430 via a diode 432. Setting control inputs 414, 416, 418, 420 and 430 at 5 volt, e.g., through processor 306, causes capacitor 410 to be charged. Setting control inputs 416, 418 and 420 at 5 volt and control inputs 414 and 430 at 0 volt, e.g., through processor 306, causes capacitor 410 to be discharged via resistor 402. The voltage level at node 412 decreases exponentially with characteristic RC time, R being the instant resistance of resistor 402, C being the capacitance of capacitor 410. Node 412 is connected to a Schmitt trigger 434 that provides an output signal of well defined voltage level, and also functions as a buffer with small input impedance so as not to affect the voltage at node 412 too severely. Schmitt trigger 434 supplies its output signal to a timer 436 in processor 306. Timer 436 stops counting when Schmitt trigger 434 switches over due to the voltage at node 412 being dropped below a particular level. The contents of timer 436 then is representative of the resistance value of resistor 402 and, therefore, of the force experienced by resistor 402.

Typically, the maximum voltage at node 412 is 4,3 volt as the voltage drop across diodes 422-428 is 0,7 volt. Schmitt trigger 434 has a typical switch-over point of 0,8 volt. Typically, the maximum time allowed to discharge is 300 µsec, and the minimum time is 1 µsec. The capacitance of capacitor 410 is typically 2,2 µf.

The contents is associated with a displacement of cursor 108 in the direction associated with resistor 402, which is to the left. Consecutively interrogating of resistors 402-408 generates consecutive timer contents that are transferred to calculation means 438. Calculation means 438 determines the difference between the up and down related timer contents, which corresponds to the sign of the vertical component of the cursor displacement, and determines the difference between the left and right related timer contents, which corresponds to the sign of the horizontal component of the cursor displacement. These signs are determined by simple comparison operations and represent one of the eight directions of the compass-card of Fig. 4.

Thereupon the appropriate data are transmitted to CD-I player 104. Note that the direction of the displacement, i.e., the combination of signs, is relevant, whereas the magnitude of the displacement as transmitted by user-interface 106 is irrelevant. The CD-I application scales down any displacement to one of a fixed length. This greatly reduces the need for high-accuracy measurements in user-interface 106. Calculation means 438 may be provided with a selection input 444 to select the required accuracy and, therefore, to select the operation mode of user-interface means 106 that herewith is rendered suitable for other than directional-control-only CD-I applications. Calculation means 438 may be a programmed microprocessor provided with look-up tables, for example.

User-interface means 106 is provided with a Universal Asynchronous Receiver and Transmitter 442 (UART) for serial RS232 communication of the data pertaining to cursor speed and direction, mentioned above as the accepted protocol in CD-I. Alternatively, processor 306 may have an UART 442 aboard such as the 8051-based 8-bit microcontrollers of Philips.

## Claims

1. A CD-I system comprising:
- a display;
- a cursor control means coupled to the display for updating a position of a cursor; and
- a user-interface means being coupled to the cursor control means for user-manipulation of the cursor via the cursor control means, and being operative to specify respective displacements of the cursor in a respective selected one of a given number of different directions; characterized in that
- the user-interface means is operative to specify each respective one of the displacements having a fixed length in a particular operating mode of the user-interface means.

2. The system of claim 1, wherein the given number of directions equals eight in the particular operating mode.

3. The system of claim 1 or 2, wherein the fixed length in the particular operating mode equals one pixel per update.

4. The system of claim 1 or 2, wherein the user-interface is programmable to operate according to a further operating mode permitting a variable-length displacement.

5. A user-interface means for use in the system of claim 1, 2, 3 or 4.
